Europäisches Patentamt

European Patent Office

Office européen des brevets

(11) Publication number: **0 306 619 B1**

## EUROPEAN PATENT SPECIFICATION

(45) Date of publication of patent specification: **25.03.92**   (51) Int. Cl.5: **G01G 19/32**

(21) Application number: **88108124.4**

(22) Date of filing: **29.04.83**

(60) Publication number of the earlier application in accordance with Art.76 EPC: **0 093 607**

(54) **Combinatorial measuring method and apparatus.**

(30) Priority: **10.05.82 JP 78638/82**

(43) Date of publication of application:
**15.03.89 Bulletin 89/11**

(45) Publication of the grant of the patent:
**25.03.92 Bulletin 92/13**

(84) Designated Contracting States:
**DE FR GB IT**

(56) References cited:
**WO-A-82/00882**
**GB-A- 2 077 067**

(73) Proprietor: **KABUSHIKI KAISHA ISHIDA KOKI SEISAKUSHO**
**44, Shogoin Sannou-cho Sakyo-ku**
**Kyoto-shi Kyoto 606(JP)**

(72) Inventor: **Minamida, Kazukiyo**
**664-74, Matsuo Minakuchi-cho**
**Kouga-gun Shiga(JP)**
Inventor: **Asai, Yoshiharu**
**326-176, Bodaiji Kousei-cho**
**Kouga-gun Shiga(JP)**

(74) Representative: **Fane, Christopher Robin King et al**
**HASELTINE LAKE & CO. Hazlitt House 28 Southampton Buildings Chancery Lane London, WC2A 1AT(GB)**

# Description

The present invention relates to a combinatorial measuring method and apparatus, for example for combining weighing data from a plurality of weighing machines, finding combined weights which are equal to a preset value or closest to such a preset value within an allowable preset range, and discharging articles from those weighing machines which have given such combined weights thus determined.

In conventional weighing methods of the type described (see GB-A-2 077 067), batches of articles are generally supplied only to those weighing machines which have discharged batches of articles except when the weighing system starts operating. In case no batch of articles is supplied to a certain weighing machine due to an uneven supply of articles to the weighing machines, or for any other reason, that weighing machine is far less probable to be supplied with a batch of articles again than other weighing machines which are properly supplied with batches of articles. Therefore, once a weighing machine is accidentally left empty, it tends to remain empty for a long period of time. This causes a substantial reduction of the number of weighing machines taking part in combinatorial weighing operations, resulting in that the accuracy of combinatorial weighing will be lowered.

It is an object of the present invention to overcome the problems caused by weighing machines remaining empty.

Various attempts have been made to improve combinatorial weighing methods. EP-A-0052498 (published after the priority date of the present application) discloses a method of speeding up weighing operations, while maintaining a given degree of accuracy of combinatorial weighing, by computing in a first cycle weight totals from values from the 1st to mth of n weighing machines, and in a second cycle from the m + 1th to nth weighing machines and from weighing machines not selected for discharge in the first cycle.

The nature of some articles is conducive to an uneven supply of articles to weighing machines. When this happens, a combination of weighing machines giving combined weights within an allowable preset weight range may not be available even after all predetermined weight combinations have been executed. To cope with this difficulty, there is known from WO-8200882 a method of additionally supplying a batch of articles to a weighing machine, and then combining article weights measured by the same group of weighing machines. This method requires a weighing machine supplied with additional articles to participate in a subsequent combinatorial computation operation. Therefore, the method cannot be incorporated in the foregoing method disclosed in EP-A-0052498 since with the disclosed method, weighing machines supplied with batches of articles are allowed to take part in combinatorial computations only in alternative combinatorial computation cycles.

Further, neither of the above-mentioned documents address the problem of empty weighing machines.

Attention is drawn to European Patent Application No. 83302469.8 (EP-A-0 093 607) of which the present application is a divisional.

According to one aspect of the present invention there is provided a combinatorial weighing method using a plurality of weighing machines in which method, in each of successive computation cycles, a supply operation is carried out, for supplying articles to be weighed to machines of the plurality, respective weight values provided by machines of the said plurality are combined in different combinations, the combination whose total weight value is equal or closest to a target weight and between preset allowable limits is selected, and the articles held by the weighing machines providing the weight values making up the selected combination are discharged to form a desired batch, characterised by detecting in such a cycle whether any of the said weight values provided in that cycle indicates that the machine concerned is empty, and supplying articles to the or each such detected empty weighing machine during a subsequent supply operation for replenishing discharged machines.

According to another aspect of the present invention there is provided a combinatorial weighing apparatus, for use in weighing out successive batches of articles, comprising: computing means for accepting weight values from a plurality of weighing machines which have been supplied with articles to be weighed and for combining said weight values in different combinations, the combination whose total weight value is equal or closest to a target weight between preset allowable limits being selected; means responsive to a discharge command signal from the computing means for discharging the articles held by the weighing machines making up the selected combination to form a desired batch; and supply means responsive to a supply command signal for replenishing any discharged weighing machines; characterised by detection means arranged to receive said weight values and to produce an empty detection signal in the event that any of the said weight values is indicative that the machine concerned is empty, the supply means being responsive to the empty detection signal to replenish any empty weighing machines so detected.

For a better understanding of the present invention and to show how the same may be carried into effect, reference will now be made, by way of example, to the accompanying drawings in which:-

FIG. 1 is a block diagram of an apparatus for use in a combinatorial weighing method of an embodiment of the present invention; and

FIGS. 2 and 3 are a flowchart of operations of the apparatus shown in FIG. 1.

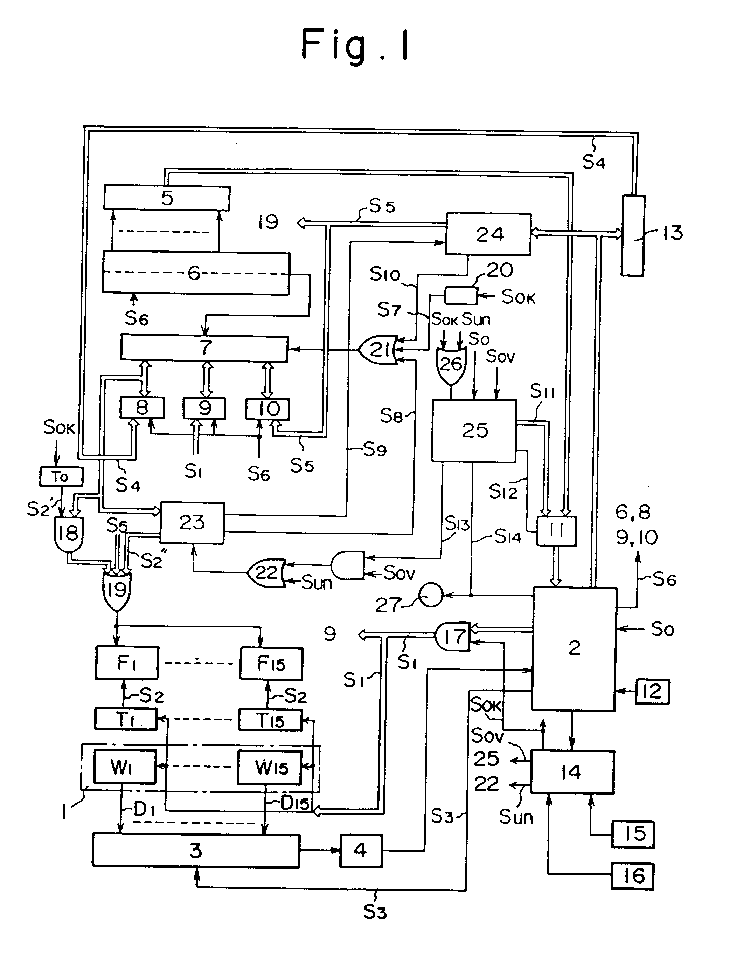

A combinatorial weighing apparatus and method in accordance with an embodiment of the present invention will now be described with reference to FIGS. 1 through 3.

As shown in FIG. 1, an apparatus for effecting the combinatorial weighing method has a weighing unit 1 comprising a plurality (fifteen, for example) of weighing machines W1 through W15 circularly arranged at angularly equal intervals. The weighing machines W1 through W15 discharge batches of articles from their weighing hoppers (not shown) in response to a discharge command signal S1 from a combinatorial unit 2, and are supplied with batches of articles from supply units F1 through F15, respectively, a preset interval of time after the articles have been discharged, for issuing weight values or weighing data D1 through D15. The supply units F1 through F15 are associated respectively with the weighing machines W1 through W15, and are responsive to a supply command signal S2 from timer circuits T1 through T15 for supplying batches of articles to the weighing hoppers of the corresponding weighing machines.

The timer circuits T1 through T15 serve to provide a certain difference between the time when the weighing hoppers start discharging articles and the time when the weighing hoppers start being supplied with articles. The timer circuits T1 through T15 are energizable in response to the discharge command signal S1 and, upon elapse of a given interval of time, issue the supply command signal S2.

The weighing data D1 through D15 issued from the weighing machines W1 through W15 are selected by a first multiplexer 3. Only the weighing data selected by the first multiplexer 3 are successively delivered through an A/D converter 4 to a combinatorial computing unit 2. The multiplexer 3 is controlled to select the weighing data by a combination command signal S3 issued from the combinatorial computing unit 2.

A selector 5 is employed to determine which weighing machines are to be designated by the combination command signal S3. The selector 5 is supplied with weighing machine numbers (numbers assigned respectively to the weighing machines for identification purpose) and flags indicating operating conditions of the weighing machines from a shift register 6. Based on these input data, the selector 5 determines whether the weighing machines W1 through W15 are in the supply or discharge cycle, and selects a required number of weighing machines which are not in either the discharge or the supply cycle. For example, where there are a total of fifteen weighing machines available, a maximum of ten out of these weighing machines are picked out which are not in the article discharge or supply cycle.

The shift register 6 serves to store the weighing machine numbers and the flags indicating operating conditions of the weighing machines, the weighing machine numbers being paired with the flags, respectively. The shift register 6 is controlled by a register controller 7 for shifting the information stored therein.

The register controller 7 is connected with an empty memory 8, a discharge memory 9 and an addition memory 10. Each of these memories 8, 9, 10 is composed of memory devices such as flip-flops, fifteen in number, for example, corresponding respectively to the weighing machines. The discharge command signal S1, an empty detection signal S4, an additional supply signal S5, and other signals are stored as flag signals in these memories 8, 9, 10.

The register controller 7 detects the weighing machine numbers of empty weighing machines, the weighing machine numbers of those weighing machines which are in the mode of discharging articles, and the weighing machine numbers of those weighing machines which are in the mode of being additionally supplied with articles, based on the flags stored in the memories 8, 9, 10. Upon detection of these weighing machine numbers, the register controller 7 clears the corresponding weighing machine numbers and their flags in the shift register 6, and shifts the remaining weighing machine numbers and their flags successively leftward (for example, in FIG. 1) to the cleared storage locations. Then, the register controller 7 writes the weighing machine numbers and their flags as detected from the memories 8, 9, 10 into the righthand storage locations from which the data have been cleared. Stated otherwise, the weighing machine numbers and their flags as selected by the selector 5 are erased in the shift register 6, and the remaining weighing machine numbers and flags are successively shifted to the left in the shift register 6. The erased weighing machine numbers and flags are then sequentially stored from the righthand end of the shift register 6. The weighing machine numbers and flags of the weighing machines to be selected are therefore rotated in the shift register 6. This makes it possible to uniformalize the frequency of use of the weighing machines.

When a set of weighing machines to take part in a first combinatorial weighing operation are thus selected, the weighing machine numbers of the selected weighing machines are delivered from the selector 5 via a second multiplexer 11 into the combinatorial computing unit 2.

Based on this input signal, the combinatorial computing unit 2 issues the combination command signal S3 indicative of the selected weighing machines to the first multiplexer 3, and successively receives the weighing data from the selected weighing machines via the A/D converter 4. The received weighing data are then temporarily stored in a register in the combinatorial computing unit 2, and then combined in a prescribed sequence to determine a weight combination equal to a preset value or greater than and closest to the preset value, the preset value being provided by a setting unit 12. When the combinatorial computation is over, the combinatorial computing unit 2 issues a computation end signal as a clear signal 6 to the shift register 6 and the memories 8, 9, 10 to clear all of the flags stored therein. Thus, each combinatorial computing operation puts an end to one cycle of a weighing operation.

When all the flags are cleared after the combinatorial computing operation, the weighing data stored in the register in the combinatorial computing unit 2 are transferred to an empty detector 13 which detects an empty machine supplied with no articles among the weighing machines that participated in the combinatorial weighing. The detection of any empty weighing machine is effected each time one combinatorial computing operation is finished. Alternatively, the detection may be carried out each time a certain number of combinatorial computing operations are completed. If there is any empty weighing machine detected, the empty detector 13 generates an empty detection signal S4 which sets an empty flag in the storage location for the empty weighing machine in the empty memory 8.

After any empty weighing machines have been detected, the combinatorial computing unit 2 issues the determined combination of total weights equal or closest to the preset value to a comparator 14. The comparator 14 determines whether the supplied weight combination falls within an allowable preset range defined by upper and lower limits set by upper and lower setting units 15, 16.

If the weight combination falls in the allowable preset range, the comparator 14 applies an acceptance signal Sok to AND gates 17 associated respectively with the weighing machines giving the weight combination, thereby opening the AND gates 17. These weighing machines are then supplied with the discharge command signal S1 to discharge the articles from their weighing hoppers. The discharge command signal S1 is also applied to the discharge memory 9 to set discharge flags indicative of discharged conditions in the storage locations for the weighing machines. This removes the weighing machines having discharged the articles from the combination of weighing machines in the next computation cycle of the weighing operation.

The acceptance signal Sok is also applied to a timer circuit T0 identical in construction to the timer circuits T1 through T15. Upon elapse of a given interval of time, the timer circuit T0 delivers an article supply command signal S2$'$ to AND gates 18 associated respectively with the weighing machines. At this time, the AND gate 18 corresponding to the empty weighing machine is supplied with the empty flag from the empty memory 8. Therefore, the supply command signal S2$'$ from the timer circuit T0 is given to the supply unit corresponding to the empty weighing machine through an OR gate 19. The empty weighing machine is accordingly supplied with a batch of articles at the same time that the weighing machines which have discharged their articles with new batches of articles again.

The acceptance signal Sok is also applied to a delay circuit 20 which, upon elapse of a preset period of time, issues an operation command singal S7 to the register controller 7 via an OR gate 21. The register controller 7 is responsive to the operation command signal S7 for controlling the shift register 6 to shift the weighing machine numbers and their flags for a next weighing machine combination.

If the weight combination is below the allowable preset range, then the comparator 14 produces an under signal Sun that is applied via an OR gate 22 to an empty flag detector 23. More specifically, when the weight combination is smaller than the allowable preset range, the weighing machine with an empty flat set up therefor is first detected to find the cause of such a failure.

The empty flag detector 23 is supplied at all times with flag information from the empty memory 8. In response to the under signal Sun, the empty flag detector 23 detects whether there is any empty weighing machine having an empty flag set up therefor based on the flag information. If there is an empty weighing machine detected, then the empty flag detector 23 supplies, via the OR gate 19, an article supply command signal S2$''$ to the supply unit for the detected empty weighing machine, and then issues a detection end signal or operation command signal S8 via the OR gate 21 to the register controller 7 for starting the operation of the latter to shift the weighing machine numbers and their flags for a next weighing machine combination.

If there is no weighing machine with an empty flag set up therefor, then the empty flag detector 23 delivers a command signal S9 to a lightweight detector 24 for starting operation of the latter. The lightweight detector 24 is supplied with the weighing machine numbers of the weighing machines having participated in the combinatorial weighing and theie weighing data from the combinatorial computing unit 2. In response to the command signal S9, the lightweight detector 24 detects a suitable number, three for example, of weighing machines giving smaller weight values than other weighing data. Then, the lightweight detector 24 issues an additional article supply signal S5 via the OR gate 19 to the supply units for the detected weighing machines for thereby supplying additional articles to the detected weighing machines. This eliminates any insufficient number of articles supplied which has caused the failure of finding a proper combination of article weights. To prevent the detected weighing machines from being selected in the combination of weighing machines to take part in a next computation cycle, the additional supply signal S5 is also supplied to the addition memory 10 to set addition flags in the storage location for the detected weighing machines. Thereafter, the lightweight detector 24 applies a command signal S10 via the OR gate 21 to the register controller 7 for starting operation of the register controller 7.

Accordingly, when any combination of total weights is below the allowable preset range, an empty weighing machine, if any, is supplied with a batch of articles. If there is no such empty weighing machine, those weighing machines which give smaller article weights are supplied with additional articles. Any insufficient supply of articles to weighing machines is therefore rectified which has brought about such a weighing failure.

When the total weight value of the selected combination is greater than the allowable preset range, no articles are additionally supplied to weighing machines since such a weight combination is highly likely to be occasioned by an excessive supply of articles. To correct such a situation, a new combination of weighing machines is selected out of all of the weighing machines for a next combinatorial computation cycle and combinatorial computing operation is performed on weighing data from such a new combination of weighing machines.

There are various methods of newly selecting combined weighing machines. According to the illustrated method, the fifteen weighing machines W1 through W15 are divided into three groups A, B, C each composed of five weighing machines, and two out of the three groups are selected for combinatorial weight computation.

More specifically. if a weight combination is found to be larger than the allowable preset range as a result of comparison in the comparator 14, then the comparator 14 issues an over signal Sov to a grouping controller 25. The grouping controller 25 selects two out of the three groups A, B, C in response to the input over signal Sov, and delivers the selected weighing machine numbers as a designation signal S11 through the second multiplexer 11 to the combinatorial computing unit 2 so that the selected weighing machines will be designated as those to take part in a next combinatorial computation cycle. The designation signal S11 is issued from the grouping controller 25 in synchronism with a computation start signal S0 applied thereto.

The computation start signal S0 is generated by a packaging machine (not shown) operatively connected with the combinatorial weighing system in synchronism with an article request signal from the packaging machine. The computation start signal S0 is supplied to the combinatorial computing unit 2 and the grouping controller 25.

The designation signal S11 from the grouping controller 25 is allowed to enter the combinatorial computing unit 2 by a signal switching control signal S12. The acceptance signal Sok and the under signal Sun are applied as operation release signals via an OR gate 26 to the grouping controller 25. Therefore, the designation of a combination of weighing machines by the grouping controller 25 can be rendered invalid when any combination has a total weight value falling within or below the allowable preset range. If any weight combination remains larger than the allowable preset range as a result of comparison in the comparator 14 after all combinations of the weighing machines have been executed under the control of the grouping controller 25, then the grouping controller 25 generates an operation command signal S13 for entering the foregoing mode of operation to detect an empty weighing machine.

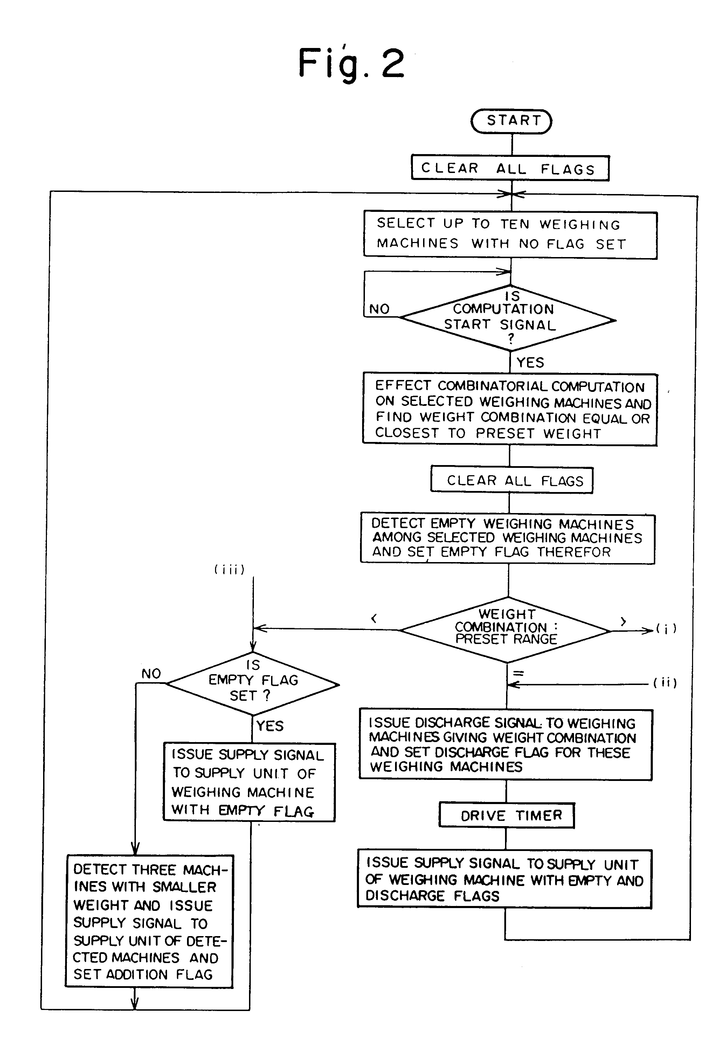

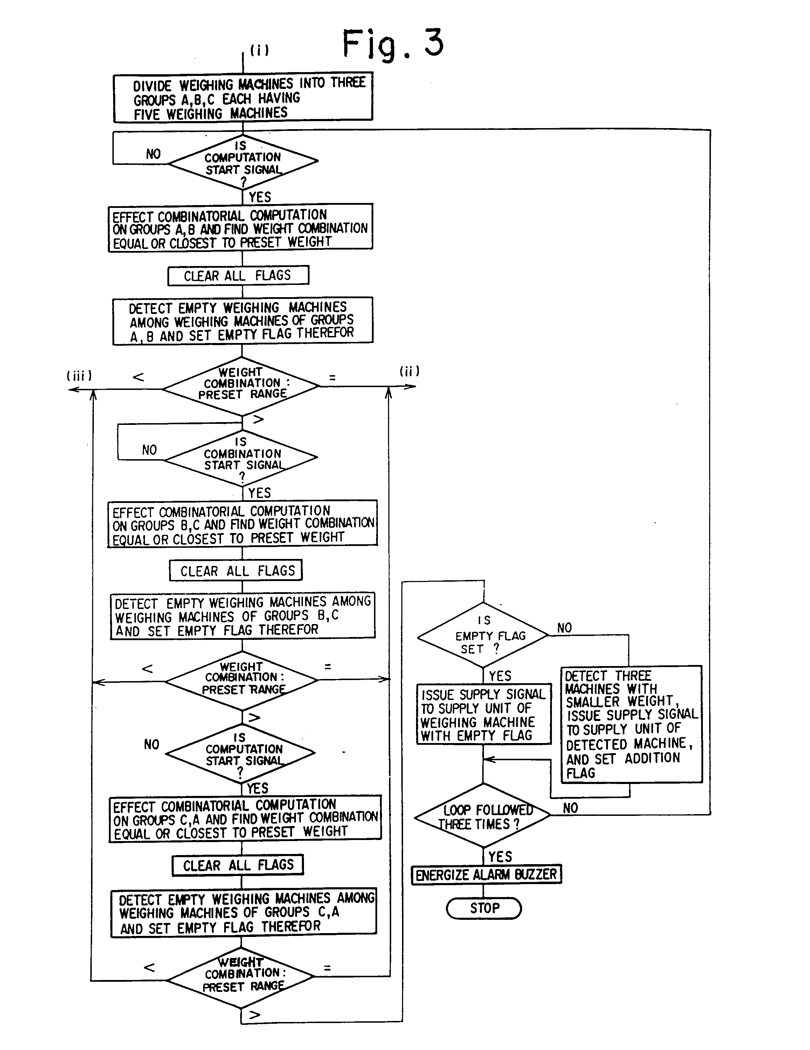

Operation of the apparatus shown in FIG. 1 will be described with reference to FIGS. 2 and 3.

At an initial stage, the data stored in the shift register 6 and the memories 8, 9, 10 are all cleared, and then the weighing machine numbers, 1 through 15, are sequentially stored in the shift register 6.

Thereafter, the selector 5 selects up to ten weighing machines with no flag set therefor. Since there is no flag set at the initial stage, the weighing machines with numbers 1 through 10, that is, the weighing machines W1 through W10, are selected for a first cycle of combinatorial computation. When the computation start signal S0 is supplied from the packaging machine, the combinatorial computing unit 2 performs combinatorial weight computation on the selected weighing machines.

When the combinatorial weight computation is over, the computation end signal is issued from the combinatorial computing unit 2 to clear the flags in the shift register 6 and the memories 8, 9, 10. Then, weighing data D1 through D10 in the combinatorial computing unit 2 are transferred to the empty detector 13.

The empty detector 13 detects whether the weighing machines are empty or not based on the weighing data D1 through D10. Since all of the weighing machines W1 through W10 are empty during the initial stage, they are all detected as empty, and empty flags are set in storage locations of the empty memory 8 for the selected weighing machines.

A combination of total weights as found by the combinatorial computing unit 2 is delivered to the comparator 14 which then determines whether the weight combination falls within an allowable preset weight range. Naturally, the weight combination is below the allowable preset range. Therefore, the comparator 14 issues the under signal Sun through the OR gate 22 to the empty flag detector 23.

The empty flag detector 23 serves to detect any empty weighing machines based on the flag information stored in the empty memory 8. If there is any empty weighing machine or machines, then the empty flag detector 23 delivers the article supply command signal S2″ to the supply unit or units for the empty weighing machine or machines. At the initial stage, the supply command signal S2″ is fed to the supply units Fl through F10 for the weighing machine numbers from 1 through 10. Accordingly, all of the weighing machines W1 through W10 selected for combinatorial weighing operation are supplied with batches of articles in a first cycle of article supply.

When the empty flags have been detected, the detection end signal S8 is applied as an operation start signal to the register controller 7. The register controller 7 then shifts the weighing machine numbers and their flags in the shift register 6 for a next combinatorial computation cycle. More specifically, the unselected weighing machine numbers 11 through 15 and their flags are moved to the left in the shift register 6, and the selected weighing machine numbers 1 through 10 and their flags are stored in the righthand empty storage locations in the shift register 6. In the illustrated embodiment, empty flags have been set in flag storage locations for the weighing machine numbers 1 through 10.

Then, the selector 5 selects the weighing machine numbers of a maximum of ten weighing machines with no empty flags. In the illustrated embodiment, the weighing machine numbers 11 through 15 are selected. The weighing machines of the selected weighing machine numbers are designated for a second combinatorial computation cycle, and weighing data D11 through D15 from the selected weighing machines are delivered to the combinatorial computing unit 2.

In response to the computation start signal S0 from the packaging machine, the combinatorial computing unit 2 executes combinatorial weight computation to find a combination of total weights closest to a preset value. Since the selected weighing machines W11 through W15 are all empty at this time, they are then supplied with batches of articles in the same manner as described above. All of the empty flags stored in the shift register 6 and the empty memory 8 are cleared after the foregoing combinatorial weight computation. Therefore, the weighing machines W1 through W10 selected in the first cycle of the combinatorial weighing operation now becomes selectable for a third cycle of combinatorial computation of the weighing operation.

In the third cycle of combinatorial weighing operation, the ten weighing machines W1 through W10 are selected to take part in combinatorial computation. Then, the combinatorial computation is effected, all flags are cleared and any empty weighing machines are detected. Subsequently, the comparator 14 ascertains whether the total weight value as combined by the combinatorial computing unit 2 falls within an allowable preset range or not.

If the weight combination is within the allowable preset range, then the combinatorial computing unit 2 issues the article discharge command signal S1 to those weighing machines which give such weight combination, for thereby enabling the weighing machines to discharge articles. Upon elapse of a given interval of time, the weighing machines thus emptied and any empty weighing machines that have already been detected are supplied with batches of articles.

If the weight combination is below the allowable preset range, then the program enters a loop beginning with (iii) in FIG. 2.

The empty flag detector 23 detects whether there are weighing machines with empty flags set therefor in the empty memory 8. If any, then empty weighing machines are supplied with batches of articles. If not, then the lightweight detector 24 is enabled to detect a suitable number, three for instance, of weighing machines having smaller weighing data out of all weighing machines that have participated in the combinatorial weighing operation, and the detected weighing machines are supplied with additional articles.

If the weight combination is greater than the allowable preset range, then the program goes to a loop beginning with (i) shown in FIG. 3.

More specifically, the grouping controller 25 divides the fifteen weighing machines W1 through W15 into the three groups A, B, C, and designates the two groups A, B as the weighing machines to take part in the second cycle of combinatorial weighing operation. In response to the computation start signal S0, the combinatorial computing unit 2 effects combinatorial computation on the weighing data from the weighing machines in the groups A, B to find a combination of weights closest to the preset value. Upon completion of the combinatorial computation, the combinatorial computing unit 2 issues the computation end signal to clear the flags set in the shift register 6 and the memories 8, 9, 10, and then enables the empty detector 13 to detect any empty weighing machine.

Thereafter, the weight combination as determined by the combinatorial computing unit 2 is applied to the comparator 14 which determines whether the weight combination falls within the allowable preset range or not.

If in the allowable preset range, then the program goes to a loop (ii) illustrated in FIG. 2. If below the range, then the program enters the loop (iii) of FIG. 2. If above the range, then the program proceeds along the flowchart of FIG. 3 to effect another combinatorial computation operation on the weighing machines in the two groups B, C in response to a next computation start signal S0. The computation end signal is then used to clear the flags set in the shift register 6 and the memories 8, 9, 10. Thereafter, any empty weighing machines are detected, and the comparator 14 determines whether a weight combination as found falls in the allowable preset range.

The foregoing procedure, including selection of weighing machines, combinatorial computation, clearing of all flags, detection of any empty or underweight weighing machines and other operations, is repeated to perform a combinatorial weighing operation on the groups C, A of weighing machines. If the weight combination as found remains still higher than the allowable preset range, then the same process as in the loop (iii) of FIG. 2 is followed to change the weighing data from the weighing machines in the groups C, A. Thereafter, a combinatorial weighing operation is effected on weighing data from the weighing machines in the groups A, B.

In this manner, the groups A, B of weighing machines, the groups B, C of weighing machines, and the groups C, A of weighing machines are successively combined for finding weight combinations. If, however, such weight combinations determined through three different combinations of weighing machines have turned out greater than the allowable preset range, it is judged that a proper weight combination can no longer be available. The grouping controller 25 then issues a signal S14 for energizing an alarm 27 to stop all operation of the combinatorial weighing system.

While in the foregoing embodiments combinatorial weighing is illustrated, the present invention is also applicable to combinatorial counting which is normally performed by dividing a total combined weight by a unit weight.

As described withparticular reference to Figures 1 to 3 weighing machines with no articles supplied thereto are detected among those which are to take part in combinatorial weighing operation each time combinatorial computation is performed, and if there is any unsupplied weighing machine detected, then a batch of articles is supplied to the detected weighing machine. Accordingly, any empty weighing machines can immediately be eliminated. Therefore, weighing machines available for combinatorial computation are rendered substantially more effective with a resulting increased degree of accuracy of combinatorial computation.

Although certain preferred embodiments have been shown and described, it should be understood that many changes and modifications may be made therein without departing from the scope of the appended claims.

## Claims

1.  A combinatorial weighing method using a plurality of weighing machines in which method, in each of successive computation cycles, a supply operation is carried out, for supplying articles to be weighed to machines of the plurality, respective weight values (D1 - D10) provided by machines of the said plurality are combined in different combinations, the combination whose total weight value is equal or closest to a target weight and between preset allowable limits is selected, and the articles held by the weighing machines providing the weight values making up the selected combination are discharged to form a desired batch, characterised by detecting in such a cycle whether any of the said weight values provided in that cycle indicates that the machine concerned is empty, and supplying articles to the or each such detected empty weighing machine during a subsequent supply operation for replenishing discharged machines.

2.  A combinatorial weighing method according to claim 1, wherein said detecting step is carried out for each computation cycle.

3.  A combinatorial weighing method according to claim 1, wherein said detecting step is carried out for each of successive groups of computation cycles.

4.  A combinatorial weighing method according to claim 1, 2 or 3, wherein each computation cycle is effected on weight values from a set of weighing machines (W1 - W10) selected from said plurality of weighing machines (W1 - W15), the weighing machines of the selected set excluding those which discharged articles during a previous computation cycle and any such detected empty weighing machines.

5.  A combinatorial weighing apparatus, for use in weighing out successive batches of articles, comprising: computing means (2) for accepting weight values (D1 - D10) from a plurality of weighing machines (W1 - W15) which have been supplied with articles to be weighed and for combining said weight values in different combinations, the combination whose total weight value is equal or closest to a target weight within preset allowable limits being selected; means responsive to a discharge command signal (S1) from the computing means (2) for discharging the articles held by the weighing machines making up the selected combination to form a desired batch; and supply means (F1 - F15) responsive to a supply command signal (S2) for replenishing any discharged weighing machines; characterised by detection means (13) arranged to receive said weight values and to produce an empty detection signal (S4) in the event that any of the said weight values is indicative that the machine concerned is empty, the supply means (F1 - F15) being responsive to the empty detection signal to replenish any empty weighing machines so detected.

6.  Apparatus according to claim 5, which comprises timing means (T1 - T15) arranged to receive the discharge command signal (s1) and to issue the supply command signal (S2) a predetermined time thereafter.

7.  Apparatus as claimed in claim 5 or 6, comprising a shift register (6) for storing weighing machine numbers allotted respectively to the weighing machines with respective flags indicative of operating conditions of the weighing machines, e.g. whether the weighing machine is being supplied with articles or is discharging its articles, there being selecting means (5) arranged to receive said weighing machine numbers and associated flags from said shift register, thereby to select for combinatorial computation successive sets of weighing machines from those weighing machines of the plurality which are not discharging or being supplied with articles.

8.  Apparatus as claimed in claim 7, comprising a plurality of memories (8, 9, 10) each memory including storage devices associated respectively with said weighing machines, the memories (8, 9, 10) being for storing respectively flags indicative that a weighing machine is empty (S4), a weighing machine is to be discharged (S1), and a weighing machine is required to be supplied with additional articles (S5); and shift register control means (7) for detecting the weighing machine numbers of weighing machines having such flags associated therewith, and for transferring the detected weighing machine numbers and their associated flags to locations in said shift register such as to avoid selection in a set of weighing machines for combinatorial computation, while transferring undetected weighing machine numbers to locations in the shift register from which they can be selected in such a set of weighing machines.

9.  Apparatus as claimed in claim 8, in which the computing means (2) is arranged to receive, from a multiplexer (11) of the apparatus, an input signal indicative of the weighing machine numbers of weighing machines making up a selected set and to issue a combination command signal (S3) to a further multiplexer (3) in response to said input signal from which further multiplexer the computing means (2) accepts the weight values (D1 - D10) from the selected weighing machines (W1 - W10) and, after determining the selected combination, delivers a computation end signal (6) to said shift register (6) and said memories (8, 9. 10) to clear all flags stored in said shift register and said memories.

10.  Apparatus as claimed in any of claims 5 to 9, comprising lightweight detector means (23) arranged to receive the weighing machine numbers and corresponding weight values of weighing machines in a selected set for detecting at least one weighing machine which is supplying a smaller weight value than the remaining weighing machines of the set and issuing an additional article supply signal (S5) to the supply means (F1 - F15) of the detecting weighing machine(s) so as to cause additional articles to be supplied to the detected weighing machines, thereby correcting any insufficient supply of articles which would result in a failure of finding a suitable total weight combination.

11.  Apparatus as claimed in any of claims 5 to 10, comprising a grouping controller (25) for dividing said weighing machines into a plurality of groups (A, B, C), for selecting groups from said plurality of groups of weighing machines in response to a signal (Sov) indicative that the selected combination has a total weight value lying above the upper limit, and for issuing the weighing machine numbers of the selected weighing machines to said computing means (12), for use in obtaining a next desired batch.

## Revendications

1. Procédé de pesage combinatoire utilisant une pluralité de machines de pesage, procédé dans lequel, lors de chacun des cycles de calcul successifs, une opération d'approvisionnement est effectuée pour fournir des objets à peser à des machines de la pluralité, des valeurs respectives de poids (D1 à D10) fournies par des machines de ladite pluralité sont combinées en différentes combinaisons, la combinaison dont la valeur de poids total est égale à un poids visé ou toute proche de ce dernier et est comprise entre des limites admissibles prédéterminées est choisie, et les objets contenus dans les machines de pesage qui fournissent les valeurs de poids constituant la combinaison choisie sont déchargés pour former un lot voulu, caractérisé en ce que, lors d'un tel cycle, il est détecté si l'une quelconque desdites valeurs de poids fournies lors de ce cycle indique que la machine concernée est vide, et en ce que, pendant une opération d'approvisionnement ultérieure pour remplir les machines déchargées, des objets sont fournis à la machine de pesage ou à chaque machine de pesage vide ainsi détectée.

2. Procédé de pesage combinatoire selon la revendication 1, dans lequel ladite étape de détection est effectuée à chaque cycle de calcul.

3. Procédé de pesage combinatoire selon la revendication 1, dans lequel ladite étape de détection est effectuée pour chacun des groupes successifs de cycles de calcul.

4. Procédé de pesage combinatoire selon la revendication 1, 2 ou 3, dans lequel chaque cycle de calcul est effectué à l'aide de valeurs de poids provenant d'un ensemble de machines de pesage (W1 à W10) choisies parmi ladite pluralité de machines de pesage (W1 à W15), les machines de pesage de l'ensemble choisi excluant celles dont les objets ont été déchargés pendant un cycle de calcul précédent et toute machine de pesage vide ainsi détectée.

5. Appareil de pesage combinatoire, servant à peser des lots successifs d'objets, comprenant: un moyen de calcul (2) pour recevoir des valeurs de poids (D1 à D10) provenant d'une pluralité de machines de pesage (W1 à W15) qui ont été alimentées en objets à peser et pour combiner lesdites valeurs de poids en différentes combinaisons, la combinaison dont la valeur de poids total est égale à un poids visé ou toute proche de celui-ci dans des limites admissibles prédéterminées étant choisie; un moyen réagissant à un signal (S1) d'instruction de déchargement provenant du moyen de calcul (2) pour décharger les objets contenus dans les machines de pesage constituant la combinaison choisie pour former un lot voulu; et des moyens d'approvisionnement (F1 à F15) réagissant à un signal (S2) d'instruction d'approvisionnement pour remplir toute machine de pesage déchargée; caractérisé par un moyen de détection (13) conçu pour recevoir lesdites valeurs de poids et produire un signal (S4) de détection de machine vide dans le cas où l'une quelconque desdites valeurs de poids indique que la machine concernée est vide, les moyens d'approvisionnement (F1 à F15) réagissant au signal de détection de machine vide pour remplir toute machine de pesage vide ainsi détectée.

6. Appareil selon la revendication 5, qui comprend des moyens de synchronisation (T1 à T15) conçus pour recevoir le signal (S1) d'instruction de déchargement et pour émettre le signal (S2) d'instruction d'approvisionnement au terme d'un laps de temps prédéterminé après ladite réception.

7. Appareil selon la revendication 5 ou 6, comprenant un registre à décalage (6) pour stocker les numéros de machines de pesage attribués respectivement aux machines de pesage avec des indicateurs respectifs indiquant l'état de fonctionnement des machines de pesage, pour faire savoir par exemple si la machine de pesage est en train d'être approvisionnée en objets ou est en train de décharger ses objets, un moyen de sélection (5) servant à recevoir dudit registre à décalage lesdits numéros de machines de pesage et les indicateurs correspondants; afin de choisir de ce fait pour le calcul combinatoire des ensembles successifs de machines de pesage parmi les machines de pesage de la pluralité qui ne sont pas en train de décharger des objets ou d'être approvisionnés en objets.

8. Appareil selon la revendication 7, comprenant une pluralité de mémoires (8, 9, 10), chaque mémoire comportant des dispositifs de stockage correspondant respectivement auxdites machines de pesage, les mémoires (8, 9, 10) servant respectivement à stocker des indicateurs indiquant qu'une machine de pesage est vide (S4), qu'une machine de pesage doit être déchargée (S1) et qu'il faut approvisionner une machine de pesage avec des objets supplémentaires (S5); et un moyen de commande (7) du registre à décalage pour détecter les numéros de machines de pesage pour les machines de pesage auxquelles correspondent ces indicateurs et pour transférer les numéros de machines de pesage détectés et leurs indicateurs correspondants à des emplacements dudit registre à décalage de façon à éviter qu'ils ne soit choisis dans un ensemble de machines de pesage pour un calcul combinatoire, tout en transférant les numéros de machines de pesage non détectés à des emplacements du registre à décalage d'où ils peuvent être choisis dans un tel ensemble de machines de pesage.

9. Appareil selon la revendication 8, dans lequel le moyen de calcul (2) est conçu pour recevoir, depuis un multiplexeur (11) de l'appareil, un signal d'entrée indiquant les numéros des machines de pesage composant un ensemble choisi et pour émettre un signal d'instruction de combinaison (S3) vers un autre multiplexeur (3) en réponse audit signal d'entrée, le moyen de calcul (2) acceptent de cet autre multiplexeur les valeurs de poids (D1 à D10) en provenance des machines de pesages choisies (W1 à W10) et, après avoir déterminé la combinaison choisie, appliquant un signal de fin de calcul (6) audit registre à décalage (6) et auxdites mémoires (8, 9, 10) pour effacer tous les indicateurs stockés dans ledit registre à décalage et lesdites mémoires.

10. Appareil selon l'une quelconque des revendications 5 à 9, comprenant un moyen de détection (23) de poids faible conçu pour recevoir les numéros de machines de pesage et les valeurs de poids correspondantes de machines de pesage d'un ensemble choisi pour détecter au moins une machine de pesage qui fournit une valeur de poids inférieure aux autres machines de pesage de l'ensemble et pour appliquer un signal supplémentaire d'approvisionnement en objets (S5) aux moyens d'approvisionnement (F1 à F15) de la/des machine(s) de pesage détectée(s) de façon à approvisionner en objets supplémentaires les machines de pesage détectées, en corrigeant de ce fait tout approvisionnement insuffisant en objets qui risquerait d'empêcher de trouver une combinaison d'un poids total approprié.

11. Appareil selon l'une quelconque des revendications 5 à 10, comprenant un dispositif de commande de groupement (25) pour diviser lesdites machines de pesage en une pluralité de groupes (A, B, C) pour choisir des groupes parmi ladite pluralité de groupes de machines de pesage en réponse à un signal (Sov) indiquant que la combinaison choisie a une valeur de poids total supérieure à la limite maximale, et pour appliquer audit moyen de calcul (12) les numéros des machines de pesage choisies servant à obtenir un prochain lot voulu.

**Patentansprüche**

1. Kombinatorisches Wägverfahren unter Benutzung einer Gruppe mehrerer Wägmaschinen, bei dem in jedem von aufeinanderfolgenden Berechnungszyklen eine Zuführoperation zum Zuführen zu wägender Artikel zu Maschinen der Gruppe durchgeführt wird, jeweilige von Maschinen der Gruppe gelieferte Gewichtswerte (D1-D10) in verschiedenen Kombinationen kombiniert werden, diejenige Kombination gewählt wird, deren Gesamtgewichtswert einem Zielgewicht gleich ist oder diesem zwischen voreingestellten Zulässigkeitsgrenzen am nächsten kommt, und diejenigen Artikel, die von den Wägmaschinen gehalten sind, welche die die gewählte Kombination bildenden Gewichtswerte liefern, zur Bildung einer gewünschten Charge ausgegeben werden,
dadurch gekennzeichnet, daß in einem derartigen Zyklus erkannt wird, ob irgendeiner der in diesem Zyklus gelieferten Gewichtswerte anzeigt, daß die betreffende Maschine leer ist, und daß während einer nachfolgenden Zuführoperation zum Wiederauffüllen entleerter Maschinen Artikel zu der oder jeder erkannten leeren Wägmaschine zugeführt werden.

2. Kombinatorisches Wägverfahren nach Anspruch 1, bei dem der Erkennungsschritt für jeden Berechnungszyklus durchgeführt wird.

3. Kombinatorisches Wägverfahren nach Anspruch 1, bei dem der Erkennungsschritt für jede von aufeinanderfolgenden Gruppen von Berechnungszyklen durchgeführt wird.

4. Kombinatorisches Wägverfahren nach Anspruch 1, 2 oder 3, bei dem jeder Berechnungszyklus ausgeführt wird für Gewichtswerte aus einem aus der Gruppe von Wägmaschinen ausgewählten Satz von Wägmaschinen (W1-W10), wobei die Wägmaschinen des gewählten Satzes diejenigen, die während eines vorhergehenden Berechnungszyklus Artikel ausgegeben haben, sowie jegliche erkannten leeren Wägmaschinen ausschließen.

5. Kombinatorische Wägvorrichtung zum Auswägen aufeinanderfolgender Artikelchargen, mit einer Recheneinrichtung (2) zur Annahme von Gewichtswerten (D1-D10) von einer Gruppe von Wägmaschinen (W1-W15), denen zu wägende Artikel zugeführt worden sind, und zum Kombinieren der Gewichtswerte in verschiedenen Kombinationen, wobei diejenige Kombination gewählt wird, deren Gesamtgewichtswert einem Zielgewicht gleich ist oder diesem zwischen voreingestellten Zulässigkeitsgrenzen am nächsten kommt, Einrichtungen, die auf ein Ausgabebefehlssignal (S1) von der Recheneinrichtung (2) so ansprechen, daß sie zur Bildung einer gewünschten Charge diejenigen Artikel ausgeben, die von den Wägmaschinen gehalten sind, welche die gewählte Kombination bilden, und Zuführeinrichtungen (F1-F15), die auf ein Zuführbefehlssignal (S2) so ansprechen, daß sie jegliche entleerten Wägmaschinen wiederauffüllen,
gekennzeichnet durch eine Erkennungseinrichtung (13), die so ausgebildet ist, daß sie die Gewichtswerte empfängt und ein Leerzustandserkennungssignal (S4) erzeugt, falls irgendeiner der Gewichtswerte anzeigt, daß die betreffende Maschine leer ist, wobei die Zuführeinrichtungen (F1-F15) so auf das Leerzustandserkennungssignal ansprechen, daß sie jegliche so erkannten leeren Wägmaschinen wiederauffüllen.

6. Vorrichtung nach Anspruch 5, mit Zeitgebungseinrichtungen (T1-T15), die so ausgebildet sind, daß sie das Ausgabebefehlssignal (S1) empfangen und das Zuführbefehlssignal (S2) eine vorbestimmte Zeit danach ausgeben.

7. Vorrichtung nach Anspruch 5 oder 6, mit einem Schieberegister (6), das jeweils den Wägmaschinen zugeordnete Wägmaschinennummern zusammen mit jeweiligen Flaggen speichert, welche die Arbeitsbedingungen der Wägmaschinen anzeigen, z.B. ob die Wägmaschine gerade mit Artikeln beschickt wird oder ob sie ihre Artikel ausgibt, wobei Wähleinrichtungen (5) vorgesehen sind, die so ausgebildet sind, daß sie die Wägmaschinennummern und die zugehörigen Flaggen von dem Schieberegister empfangen, um dadurch zur kombinatorischen Berechnung aufeinanderfolgende Sätze von Wägmaschinen aus denjenigen Wägmaschinen der Gruppe auszuwählen, die gerade keine Artikel ausgeben oder mit Artikeln beschickt werden.

8. Vorrichtung nach Anspruch 7, mit mehreren Speichern (8,9,10), von denen jeder Speichereinrichtungen enthält, die jeweils den Wägmaschinen zugeordnet sind, wobei die Speicher (8,9,10) vorgesehen sind zum jeweiligen Speichern von Flaggen, welche anzeigen, daß eine Wägmaschine leer ist (S4), eine Wägmaschine entladen werden muß (S1), und eine Wägmaschine mit zusätzlichen Artikeln beschickt werden muß (S5), und Schieberegistersteuereinrichtungen (7) zum Erkennen der Wägmaschinennummern von Wägmaschinen, denen solche Flaggen zugeordnet sind, und zum Übermitteln der erkannten Wägmaschinennummern und der ihnen zugehörigen Flaggen an Stellen in dem Schieberegister, derart, daß die Wahl in einen zur kombinatorischen Berechnung vorgesehenen Satz von Wägmaschinen verhindert ist, während nicht erkannte Wägmaschinennummern an Stellen in dem Schieberegister übermittelt werden, aus denen sie in einen solchen Satz von Wägmaschinen gewählt werden können.

9. Vorrichtung nach Anspruch 8, bei der die Recheneinrichtung (2) so ausgebildet ist, daß sie von einem Multiplexer (11) der Vorrichtung ein Eingangssignal empfängt, das die Wägmaschinennummern von einen gewählten Satz bildenden Wägmaschinen angibt, und als Antwort auf das Eingangssignal ein Kombinationsbefehlssignal (S3) an einen weiteren Multiplexer (3) ausgibt, von dem die Recheneinrichtung (2) die Gewichtswerte (D1-D10) von den gewählten Wägmaschinen (W1-W10) empfängt, und nach der Bestimmung der gewählten Kombination dem Schieberegister (6) und den Speichern (8,9,10) ein Berechnungsendsignal (S6) zum Löschen sämtlicher in dem Schieberegister und den Speichern gespeicherter Flaggen zuführt.

10. Vorrichtung nach einem der Ansprüche 5 bis 9, mit Leichtgewichtsdetektionseinrichtungen (23), die so ausgebildet sind, daß sie die Wägmaschinennummern und entsprechende Gewichtswerte von Wägmaschinen in einem gewählten Satz empfangen, um mindestens eine Wägmaschine zu erkennen, die einen kleineren Gewichtswert als die übrigen Wägmaschinen des Satzes ausgibt, und ein Zuführsignal (S5) für zusätzliche Artikel an die Zuführeinrichtungen (F1-F15) der erkannten Wägmaschine(n) ausgibt, um zu veranlassen, daß den erkannten Wägmaschinen zusätzliche Artikel zugeführt werden, so daß jegliche unzureichende Zufuhr von Artikeln korrigiert wird, welche dazu führen würde, daß keine geeignete Gesamtgewichtskombination erkannt würde.

11. Vorrichtung nach einem der Ansprüche 5 bis 10, mit einem Gruppierungssteuerer (25) zum Teilen der Wägmaschinen in mehrere Gruppierungen (A,B,C), zum Wählen von Gruppierungen aus den mehreren Gruppierungen von Wägmaschinen als Antwort auf ein Signal (Sov), welches anzeigt, daß die gewählte Kombination einen über dem oberen Grenzwert liegenden Gesamtgewichtswert hat, und zum Ausgeben der Wägmschinennummern der gewählten Wägmaschinen an die Recheneinrichtung (2) zur Verwendung bei der Errechnung der nächsten gewünschten Charge.

# Fig. 1

# Fig. 2

# Fig. 3

(i)

DIVIDE WEIGHING MACHINES INTO THREE GROUPS A,B,C EACH HAVING FIVE WEIGHING MACHINES

NO ← IS COMPUTATION START SIGNAL ?

↓ YES

EFFECT COMBINATORIAL COMPUTATION ON GROUPS A,B AND FIND WEIGHT COMBINATION EQUAL OR CLOSEST TO PRESET WEIGHT

CLEAR ALL FLAGS

DETECT EMPTY WEIGHING MACHINES AMONG WEIGHING MACHINES OF GROUPS A,B AND SET EMPTY FLAG THEREFOR

(iii) < ← WEIGHT COMBINATION : PRESET RANGE → = (ii)

>

NO ← IS COMBINATION START SIGNAL ?

↓ YES

EFFECT COMBINATORIAL COMPUTATION ON GROUPS B,C AND FIND WEIGHT COMBINATION EQUAL OR CLOSEST TO PRESET WEIGHT

CLEAR ALL FLAGS

DETECT EMPTY WEIGHING MACHINES AMONG WEIGHING MACHINES OF GROUPS B,C AND SET EMPTY FLAG THEREFOR

< ← WEIGHT COMBINATION : PRESET RANGE → =

>

NO ← IS COMPUTATION START SIGNAL ?

↓ YES

EFFECT COMBINATORIAL COMPUTATION ON GROUPS C,A AND FIND WEIGHT COMBINATION EQUAL OR CLOSEST TO PRESET WEIGHT

CLEAR ALL FLAGS

DETECT EMPTY WEIGHING MACHINES AMONG WEIGHING MACHINES OF GROUPS C,A AND SET EMPTY FLAG THEREFOR

< ← WEIGHT COMBINATION : PRESET RANGE → =

>

IS EMPTY FLAG SET ? — NO → DETECT THREE MACHINES WITH SMALLER WEIGHT, ISSUE SUPPLY SIGNAL TO SUPPLY UNIT OF DETECTED MACHINE, AND SET ADDITION FLAG

↓ YES

ISSUE SUPPLY SIGNAL TO SUPPLY UNIT OF WEIGHING MACHINE WITH EMPTY FLAG

LOOP FOLLOWED THREE TIMES ? — NO →

↓ YES

ENERGIZE ALARM BUZZER

STOP